# EUROPEAN PATENT APPLICATION

(11) **EP 1 621 246 A1**
(43) Date of publication of application: **01.02.2006**
(21) Application number: 05076555.1
(22) Date of filing: 07.07.2005
(51) Int. Cl.: B01J 8/02, C01B 3/38

(54) **Reformer with a static mixer within the gas feeding means**

(30) Priority: 30.07.2004 US 903995
(71) Applicant: Delphi Technologies, Inc., Troy, MI 48007 (US)
(72) Inventor: Hamilton, Daniel B., Grand Blanc, Mi 48439 (US); Simpkins, Haskell, Grand Blanc, MI 48439 (US); Lecea, Oscar A., Gran Blanc, MI 48439 (US); Ricci, Michael A., El Paso, TX 79912 (US); Ciosek, James M., Davison, MI 48423 (US)
(74) Representative: Denton, Michael John

(57) **Abstract**

A reformer (100, 200) comprises a housing (10) comprising a housing inner surface (14), a housing outer surface (12), and an inlet (26); an ignition housing (16) comprising an ignition housing inner surface (20), an ignition housing outer surface (18), an opening (30), and a turbulent flow generator (28) bordering a portion of the opening (30), wherein the ignition housing (16) is disposed within the housing (16); a chamber (24) defined by the housing inner surface (20) and the ignition housing outer surface (18) in fluid communication with the inlet (26) and the opening (30); and a catalytic substrate (22) disposed within the ignition housing (16) in fluid communication with the opening (30).

## Description

### BACKGROUND OF THE INVENTION

A reformer, which can also be referred to as a fuel processor, can convert a hydrocarbon fuel (methane, propane, natural gas, gasoline, diesel, and the like) to hydrogen or to a less complex hydrocarbon. More particularly, fuel reforming can comprise mixing a hydrocarbon fuel with air, water, and/or steam in a mixing zone of the reformer prior to entering a reforming zone of the reformer, and converting the hydrocarbon fuel into, for example, hydrogen (H₂), byproducts (e.g., carbon monoxide (CO), methane (CH₄), inert materials (e.g., nitrogen (N₂), carbon dioxide (CO₂), and water (H₂O)). Common approaches include steam reforming, partial oxidation, and dry reforming.

Steam reforming involves the use of a fuel and steam (H₂O) that is reacted in heated tubes filled with a catalyst(s) to convert the hydrocarbons into principally hydrogen and carbon monoxide. The steam reforming reactions are endothermic, thus the steam reformers are designed to transfer heat into the catalytic process. An example of the steam reforming reaction is as follows:

CH₄ + H₂O → CO + 3H₂

Partial oxidation reformers are based on substoichiometric combustion to achieve the temperatures sufficient to reform the hydrocarbon fuel. Decomposition of the fuel to primarily hydrogen and carbon monoxide occurs through thermal reactions at high temperatures, e.g., about 700°C to about 1,000°C. Catalysts have been used with partial oxidation systems (catalytic partial oxidation) to promote conversion of various sulfur-free fuels, such as ethanol, into synthesis gas. The use of a catalyst can result in acceleration of the reforming reactions and can provide this effect at lower reaction temperatures than those that would otherwise be required in the absence of a catalyst. An example of the partial oxidation reforming reaction is as follows:

CH₄ + ½O₂ → CO + 2H₂

Dry reforming involves the creation of hydrogen and carbon monoxide in the absence of water, for example, using carbon dioxide as the oxidant. Dry reforming reactions, like steam reforming reactions, are endothermic processes. An example of the dry reforming reaction is depicted in the following reaction:

CH₄ + CO₂ → 2CO + 2H₂

Practical reformers can comprise a combination of these idealized processes. Thus, a combination of air, water or recycled exhaust gas can be used as the oxidant in the fuel reforming process.

Pre-ignition and/or uncontrolled combustion of the above-described mixtures can result in thermal instability of the reformer, which can damage the catalyst, catalyst support material(s), and/or substrate(s). Therefore, what is needed in the art is a reformer that can control combustion within the reformer compared to current reformer designs.

### SUMMARY OF THE INVENTION

Disclosed herein are a reformer, a method of making the reformer, and a method of using the reformer.

An embodiment of a reformer comprises a housing comprising a housing inner surface, a housing outer surface, and an inlet; an ignition housing comprising an ignition housing inner surface, an ignition housing outer surface, an opening, and a turbulent flow generator bordering a portion of the opening, wherein the ignition housing is disposed within the housing; a chamber defined by the housing inner surface and the ignition housing outer surface in fluid communication with the inlet and the opening; and a catalytic substrate disposed within the ignition housing in fluid communication with the opening.

An embodiment of a method of making a reformer comprises disposing an ignition housing within a housing comprising a housing inner surface, a housing outer surface, and an inlet, wherein the ignition housing comprises an ignition housing inner surface, an ignition housing outer surface, an opening, and a turbulent flow generator bordering a portion of the opening; creating a space between the housing inner surface and the ignition housing outer surface sufficient to define a chamber, wherein the chamber is in fluid communication with the inlet and the opening; disposing a catalytic substrate within the ignition housing, wherein the catalytic substrate is in fluid communication with the opening.

An embodiment of a method of using a reformer comprises using a turbulent flow generator to create turbulent flow in a fluid stream entering a mixing zone of the reformer, wherein the turbulent flow generator border a portion of an opening to the mixing zone of the reformer; mixing the fluid stream with a fuel by using the turbulent flow of the fluid; and reforming the fuel in a catalytic substrate disposed in the ignition housing and in fluid communication with the mixing zone.

The above-described and other features will be appreciated and understood by those skilled in the art from the following detailed description, drawings, and appended claims.

### BRIEF DESCRIPTION OF THE DRAWINGS

Referring now to the figures, which are exemplary embodiments, and wherein the like elements are numbered alike:
Figure 1 is a cross-sectional view of an embodiment of a reformer.
Figure 2 is a prospective view of an ignition housing of the reformer of Figure 1 illustrating a plurality of turbulent flow generators.
Figure 3 is a prospective view of an embodiment of a turbulent flow generator.
Figure 4 is a prospective view of another embodiment of a turbulent flow generator.
Figure 5 is a prospective view of yet another embodiment of a turbulent flow generator.
Figure 6 is a cross-sectional view of another embodiment of a reformer.
Figure 7 is a graphical representation of a computational fluid dynamic model illustrating mixing of air and fuel as a function of the radius of an ignition housing of a reformer.

### DESCRIPTION OF THE PREFERRED ENBODIMENT

It should first be noted that the reformer disclosed herein can readily be adapted for use in any system where hydrocarbon fuels are processed to hydrogen or less complex hydrocarbons, such as a fuel cell system (e.g., solid oxide fuel cell (SOFC) system, proton exchange membrane (PEM) system, and the like), a vehicle system (e.g., diesel, gasoline, and the like), and the like.

It should further be noted that the terms "first," "second," and the like herein do not denote any order or importance, but rather are used to distinguish one element from another, and the terms "a" and "an" herein do not denote a limitation of quantity, but rather denote the presence of at least one of the referenced items. Furthermore, all ranges disclosed herein are inclusive and combinable (e.g., ranges of "up to about 25 weight percent (wt.%), with about 5 wt.% to about 20 wt.% desired, and about 10 wt.% to about 15 wt.% more desired," are inclusive of the endpoints and all intermediate values of the ranges, e.g., "about 5 wt.% to about 25 wt.%, about 5 wt.% to about 15 wt.%", etc.).

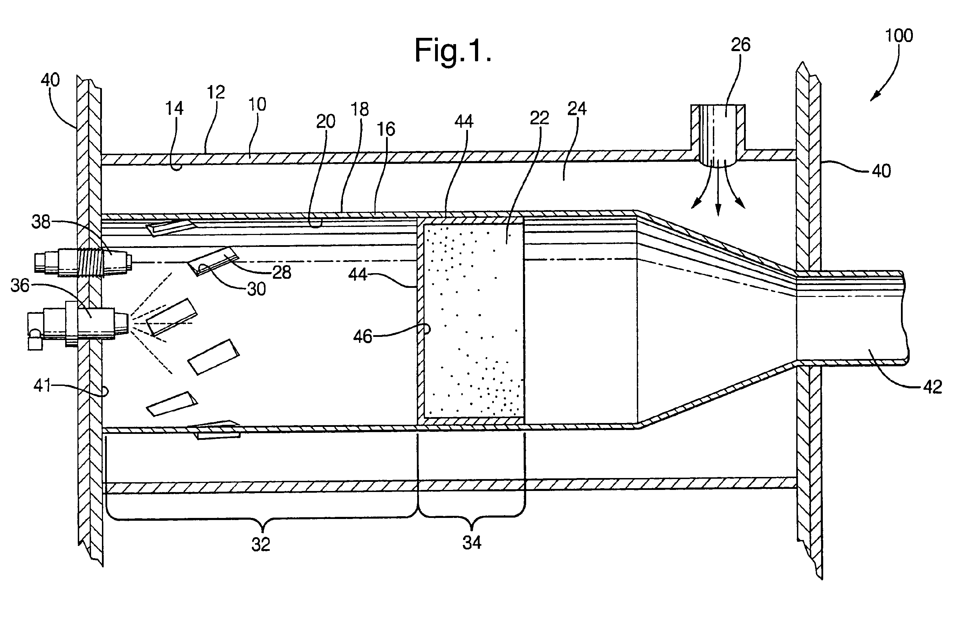

Several embodiments of a reformer are discussed hereunder with reference to individual figures. One of skill in the art will easily recognize that many of the components of each of the embodiments are similar or identical to the others. Each of these elements is introduced in the discussion of Figure 1, but is not repeated for each embodiment. Rather, it is noted that distinct structure is discussed relative to each figure/embodiment.

Referring now to Figure 1, an exemplary reformer generally designated 100 is illustrated. While the reformer 100 can comprise a multi-sided cross-sectional shape (e.g., substantially square, triangular, pentagonal, hexagonal, heptagonal, octagonal, and the like) or rounded shape (e.g., cylindrical, oval, and the like), reference is made to a substantially, cylindrically shaped reformer 100 merely for convenience in discussion. The reformer 100 comprises a housing 10 having an outer surface 12 and an inner surface 14. An ignition housing 16 having an outer surface 18 and an inner surface 20 is disposed within with housing 10. A substrate 22 comprising a catalyst is disposed in the ignition housing 16. A chamber 24 is defined by the inner surface 14 of housing 10 and the outer surface 18 of ignition housing 16. An inlet 26 of housing 10 allows a fluid (e.g., air, water, and the like) to enter chamber 24.

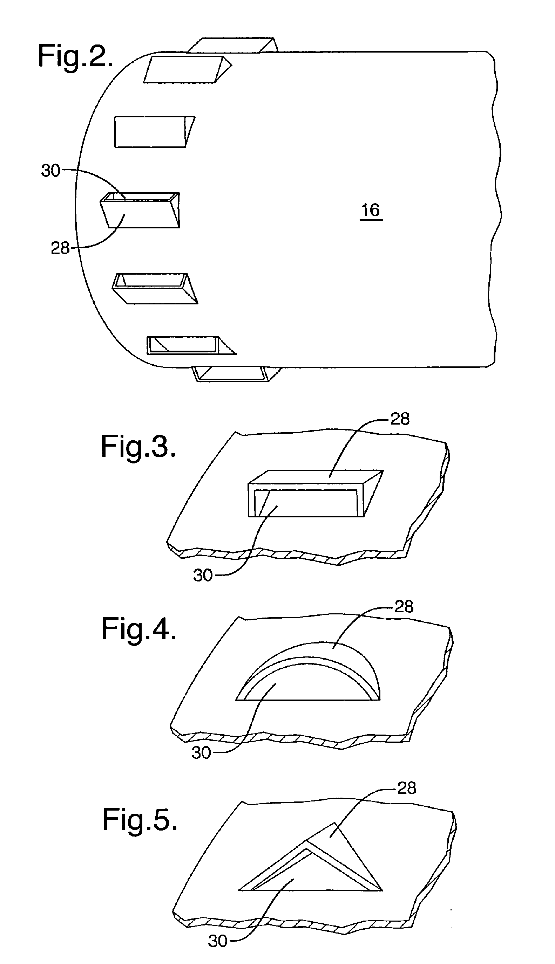

Chamber 24 is in fluid communication with substrate 22 via opening(s) 30, which is bordered at least in part by a turbulent flow generator 28. More particularly, turbulent flow generator 28 is disposed on a surface (i.e., an outer surface 18 and/or inner surface 20) of ignition housing 16 and borders a portion of opening 30 such that the turbulent flow generator 28 can generate turbulent flow (e.g., swirling, eddies, and the like) in the fluid as it enters opening 30. In various embodiments, a plurality of turbulent flow generators 28 can be employed. In other words, the number, shape, position, and the like of the turbulent flow generator 28 on the ignition housing 16 can vary with application. For example, turbulent flow generator 28 can preferably be disposed at an angle relative to the major axis of the ignition housing 16 as illustrated in Figure 1. In other embodiments, turbulent flow generator 28 can be disposed parallel to the major axis of the ignition housing 16 as illustrated in Figure 2. The number, shape, and position of the turbulent flow generator 28 are preferably selected to optimize mixing of air/fuel within the ignition housing 16.

For ease in discussion, the ignition housing 16 of reformer 100 can be segmented into a mixing zone 32 and a reforming zone 34. Generally, the mixing zone 32 is the portion of reformer 100 in which fluid (e.g., air, exhaust gas recirculation (EGR), and the like) enters the ignition housing 16 via opening(s) 30, and is mixed with fuel from injector 36, which atomizes and/or otherwise disperses the fuel into the mixing zone 32. The reformer 100 can further comprise an ignitor 38 (e.g., a spark plug or the like) for igniting the fuel to create a flame. The ignitor 38 is generally employed at start-up conditions to initiate combustion of the fuel such that the heat generated by combustion can be employed to heat the substrate 22, thereby decreasing the time for the reformer to reach an operating temperature sufficient for the fuel to be catalytically reformed by a catalyst disposed on the substrate 22. Additionally, it is noted that during the catalytic reforming of the fuel, the operating temperature within the catalyzed substrate 22 can be self-sustaining as long as fuel and oxidant (e.g., oxygen from air) are supplied to the catalyst of the substrate 22. The injector 36 and/or ignitor 38 can be fixed in position, for example, in an end plate 40 such that a portion of the injector 36 that disperses fuel and a portion of the ignitor 38 that generates a spark are each disposed within the mixing zone 32.

Generally, during operation, a fluid enters chamber 24 via inlet 26. The fluid then enters the mixing zone 32 via opening 30 bordered at least in part by turbulent flow generator 28. Within mixing zone 32, the fluid mixes with the fuel from injector 36. It is noted that the turbulent flow of fluid allows the fluid to intimately mix with the fuel, which can thereby produce a desirable fluid (e.g. air)/fuel mixture that can reduce uncontrolled combustion during both start-up conditions and normal operating conditions (i.e., catalytic fuel reforming with substrate 22). As discussed above, the fuel can preferably be combusted in the mixing zone during start-up. The fluid, fuel, and/or combustion products then enter the reforming zone 34 comprising substrate 22 that comprises a catalyst, where they are converted to reformate, for example, hydrogen (H₂), byproducts (e.g., carbon monoxide (CO), methane (CH₄), inert materials (e.g., nitrogen (N₂), carbon dioxide (CO₂), and water (H₂O)). It is noted that the fuel can be reformed by, for example, any of the above described reforming processes, e.g., steam reforming, partial oxidation reforming, dry reforming, and the like. The reformate then exits reformer 100 via outlet 42.

It is noted that the fuel employed in the reformer 100 can include, but is not limited to, hydrocarbon fuels such as gasoline, diesel, ethanol, methanol, kerosene, and the like; gaseous fuels, such as natural fluid, propane, butane, and the like; and alternative fuels, such as biofuels, dimethyl ether, and the like; as well as combinations comprising at least one of the foregoing fuels. The selection of fuel is based upon application, expense, availability, and environmental issues relating to the fuel. The housing 10 has a size and shape corresponding to the overall size and shape of the reformer 100. The housing is in operable communication with ignition housing 16 and optionally in operable and/or physical communication with end plate 40. The housing 10, ignition housing 16, and end plate 40 can comprise any material that is capable of resisting under-car salt, corrosion, and high temperatures, e.g., temperatures greater than or equal to about 600°C. For example, ferrous materials can be employed such as ferritic stainless steels. Ferritic stainless steels can include stainless steels such as, e.g., the 400 - Series such as SS-409, SS-439, and SS-441. In an exemplary embodiment, the housing 10, ignition housing 16, and end plate 40 each comprise the same materials for ease in manufacturing.

Substrate 22 is disposed within the ignition housing 16. Preferably, the substrate 22 is disposed within the ignition housing 16 a sufficient distance from an end of reformer 100 that comprises injector 36 such that a sufficient mixing zone 32 is defined by a distance from an inner surface 41 of end plate 40, which has injector 36 in physical communication therewith, to a face of substrate 46. It is further noted that a support material 44 can be disposed around the substrate 22 to retain the substrate 22 in position relative to the ignition housing 16. More particularly, the support material 44 can apply a compressive radial force about the substrate 22, thereby reducing the axial movement of the substrate 22 and retaining the substrate 22 in place within the ignition ho using 16. Preferably, the support material 44 is in the form of a mat. Additionally, it is noted that the support material can be an intumescent material (e.g., a material that comprises vermiculite component, i.e., a component that expands upon the application of heat), a non-intumescent material, or a combination thereof. These materials can comprise ceramic materials (e.g., ceramic fibers) and other materials such as organic and inorganic binders and the like, or combinations comprising at least one of the foregoing materials. Non-intumescent materials include materials such as those sold under the trademarks "NEXTEL" and "INTERAM 1101HT" by the "3M" Company, Minneapolis, Minnesota, or those sold under the trademark, "FIBERFRAX" and "CC-MAX" by the Unifrax Co., Niagara Falls, New York, and the like. Intumescent materials include materials sold under the trademark "INTERAM" by the "3M" Company, Minneapolis, Minnesota, as well as those intumescents which are also sold under the aforementioned "FIBERFRAX" trademark, as well as combinations thereof and others.

It is further noted that support material 44 can optionally cover a face 46 of the substrate 22 to act as a flame arrestor to quench potential flames that can occur due to gas phase reactions within the substrate 22. When the support material 44 acts as a flame arrestor, the support material 44 preferably has a porosity sufficient to allow fluid flow therethrough. For example, the support material 44 can be a woven ceramic material. In other embodiments, a ceramic paper or fiber can be employed. However, it is noted that employing the support material 44 as a flame arrestor can have the undesirable effect of increasing the time for the reformer 100 to reach its operating temperature. As such, embodiments are envisioned wherein the reformer 100 does not comprise a flame arrestor.

Furthermore, with regard to the substrate 22, the substrate 22 is preferably capable of operating at temperatures less than or equal to about 1,400°C; capable of withstanding strong reducing environments in the presence of water containing, for example, hydrocarbons, hydrogen, carbon monoxide, water, oxygen, sulfur and sulfur-containing compounds, combustion radicals, such as hydrogen and hydroxyl ions, and the like, and carbon particulate matter; and has sufficient surface area and structural integrity to support the desired catalytic metal component and support material. Materials that can be used as the substrate 22 include, cordierite, zirconium toughened aluminum oxide, titanium toughened aluminum oxide, aluminum oxide, zirconium oxide, titanium oxide, and the like as well as oxides, alloys, cermets, and combinations comprising at least one of the foregoing materials. These substrates can be in the form of porous glasses, foils, sponges, foams, monoliths, and the like.

Although the substrate 22 can have any size or geometry, the size and geometry of the substrate 22 are preferably chosen to optimize surface area, and to be compatible with the overall design of the reformer 100. For example, the substrate 22 can have a honeycomb geometry, with the combs through-channel having any multi-sided or rounded shape, with substantially square, triangular, pentagonal, hexagonal, heptagonal, octagonal, or similar geometries preferred due to ease of manufacturing and increased surface area.

As briefly mentioned above, a catalyst can be disposed on and/or throughout substrate 22 (hereinafter "on"). The catalyst can be washcoated, imbibed, impregnated, physisorbed, chemisorbed, precipitated, or otherwise applied onto the substrate. Possible catalyst materials include metals, such as platinum, palladium, rhodium, iridium, osmium, ruthenium, tantalum, zirconium, yttrium, cerium, nickel, copper, and the like, and oxides, mixtures, and alloys comprising at least one of the foregoing metals. For example, in the case of a platinum-rhodium combination, the catalyst can comprise less than or equal to about 95 wt.% rhodium, and less than or equal to about 30 wt.% platinum, with about 5 wt.% platinum to about 20 wt.% platinum preferred, wherein weight percents are based on the total weight of the catalyst.

Various support materials can be employed to support the catalyst(s). Preferably, the support materials, include, but are not limited to, hexaaluminates, aluminates, aluminum oxides (e.g., gamma-aluminum oxide, theta-aluminum oxide, delta-aluminum oxide), gallium oxides, zirconium oxides and titanium oxides. Since the reformer is generally subjected to temperatures greater than or equal to 1,000°C, the support material is preferably a hexaaluminate. Hexaaluminates are crystalline, porous structures that are able to withstand high temperatures, e.g., temperatures of about 1,000°C to about 1,350°C, without sintering. It is noted that even at temperatures of about 1,400°C to about 1,600°C, hexaaluminates can have a surface area as high as 20 square meters per gram (m²/g).

Inlet 26 is in fluid communication with chamber 24, which is in fluid communication with mixing zone 32 through opening(s) 30. Preferably, the fluid entering chamber 24 from inlet 26 comprises an oxidant (e.g., oxygen), which can be used to combust the fuel that is introduced into the mixing zone 32 during start-up and can be used during operation as a reactant with fuel to produce, for example, synthesis gas. While it is noted that inlet 26 can be located anywhere along the length of housing 10, the inlet 26 is preferably disposed at an end of the housing 10 opposite the end of reformer 100 that comprises injector 36 and ignitor 38. Without being bound by theory, this allows the fluid to act as an insulator to the housing 10. More particularly, as the fluid travels the length of chamber 24, thermal energy (heat) is transferred from the ignition housing 16 to the fluid. Advantageously, this allows the fluid from inlet 26 to be pre-heated before entering the mixing zone 32.

Referring now to Figures 2-5, embodiments of a turbulent flow generator 28 are illustrated. The turbulent flow generator 28 is a design feature of the reformer 100 that creates turbulent flow of the fluid as it enters mixing zone 32 via opening 30. More particularly, each turbulent flow generator 28 can comprise any shape, size, or design capable of generating turbulent flow in a fluid as it enters the mixing zone 32 as described above. For example, the turbulent flow generator 28 can comprise a geometry selected from the group consisting of a slat-like shape, e.g., louver (Figure 3), a dimple-like shape (Figure 4), a pyramid-like shape (Figure 5), and the like. The geometry of each turbulent flow generator 28 can be the same for each turbulent flow generator 28 or different. Furthermore, it is noted that the geometry of turbulent flow generator 28 is preferably selected to compliment the geometry of opening 30.

The turbulent flow generator 28 can protrude outwardly from ignition housing 16 (i.e., turbulent flow generator(s) 28 form protrusions on the outer surface 18 of ignition housing 16) and/or can protrude inwardly from ignition housing 16 (i.e., turbulent flow generator(s) 28 form protrusions on the inner surface 20 ignition housing 16). Furthermore, as briefly noted above, the number, placement, angle, and the like, of turbulent flow generator 28 can vary depending on the desired degree of mixing in the reformer 100. Preferably, the number placement, angle, and the like are selected to provide favorable mixing over a range of flow rates that may be employed in the reformer.

In an embodiment, a reformer for use on a passenger vehicle can comprise 1 turbulent flow generator to about 100 turbulent flow generators, with about 10 turbulent flow generators to about 50 turbulent flow generators preferred. The turbulent flow generators border an opening(s), wherein each opening (hole) preferably has an area less than or equal to 100 square millimeters (mm²), with an area of less than or equal to 50 mm² preferred. Preferably, the turbulent flow generators are disposed at an angle relative to the major axis of the ignition housing as illustrated in Figure 1. Furthermore, the turbulent flow generator(s) are preferably positioned in a staggered-like pattern as illustrated in Figure 1.

Additionally, it is noted that turbulent flow generator 28 can be used to increase fluid velocity, control fluid flow direction, and the like, as the fluid enters mixing zone 32. In other words, each turbulent flow generator 28 disrupts the fluid flow entering each opening 30, thereby allowing better mixing of the fluid with fuel in the mixing zone 32 of the reformer 100 compared to designs not employing turbulent flow generator 28. It should further be noted that the more uniform the mixture of fuel and oxidant (e.g. fluid from inlet 26 comprising air and/or water) is within the mixing zone 32, the more controlled the combustion (reaction) can be within the reforming zone 34 during catalytic fuel reforming. In other words, flammability of the mixture is preferably avoided to prevent burning of the fuel in the mixing zone 32 prior to entering the reforming zone 34. Additionally, it is noted that better mixing of reforming reactants (e.g., fuel and air) can improve conversion of reactants to products (e.g., synthesis gas). Preferably, a percent mixing of greater than or equal to 80% can be obtained, with greater than or equal to 90% mixing more preferred, and with complete mixing (i.e., a homogenous mixture with 100% mixing) possible.

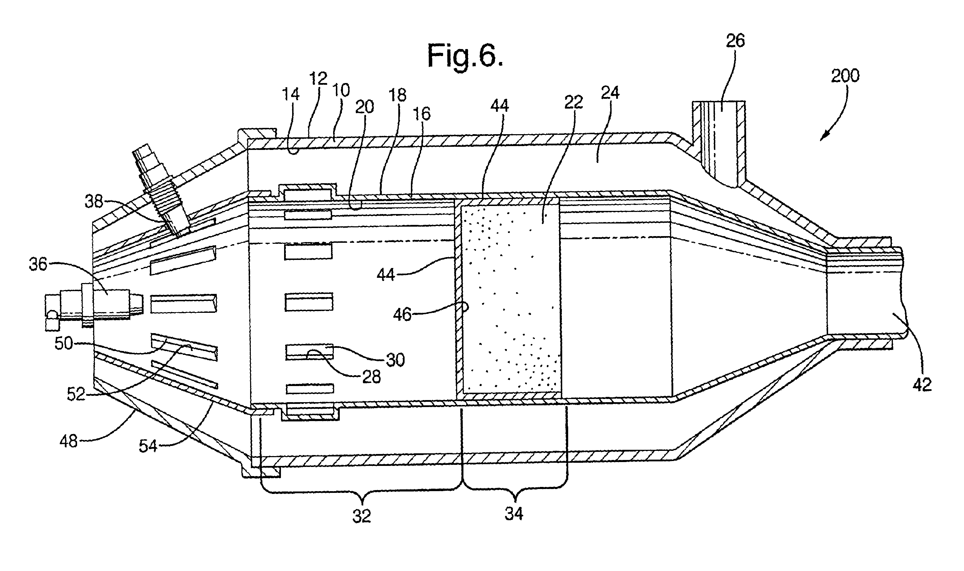

Referring now to Figure 6, another embodiment of a reformer generally designated 200 is illustrated. In this embodiment, the reformer 200 comprises end cone 54 in physical communication with the housing 10 and/or ignition housing 16, wherein the end cone 54 allows pre-mixing of fluid from inlet 26 with fuel prior to entry into mixing zone 32. The end cone 54 can be a single walled end cone or a multi-walled end cone (e.g., end cone 54 can be employed as an inner end cone of end cone 48). Preferably, end cone 54 comprises turbulent flow generator(s) 50, wherein each turbulent flow generator 50 borders at least a portion of opening 52 of end cone 54. This turbulent flow generator(s) 50 can be in addition to or alternative to turbulent flow generator(s) 28. Similar to each turbulent generator 28 disposed in ignition housing 16, each turbulent flow generator 50 can be used to increase fluid velocity, control fluid flow direction, and the like. This embodiment comprising a plurality of flow generators 50 disposed on end cone 54 can even further improve the mixing of fuel and fluid from inlet 26 over the embodiment illustrated in Figure 1 comprising end plate 40. It is noted that other embodiments are envisioned, wherein end cone 54 can be adapted for use in a reformer having a design similar to that illustrated in Figure 1. In other words, end cone 54 can be in operable and/or physical communication with an end plate (e.g., 40).

Further, it is noted that the above discussion with regards to turbulent flow generator 28 is equally applicable to turbulent flow generator 50. For example, turbulent flow generator 50 can protrude outwardly from an outer surface of end cone 54 (i.e., turbulent flow generator(s) 50 form protrusions on an outer surface of end cone 54) and/or can protrude inwardly from an inner surface of end cone 54 (i.e., turbulent flow generator(s) 50 forms protrusions on an inner surface of end cone 54). It is further noted that the number, placement, angle, and the like, of turbulent flow generator 50 can vary depending on the desired degree of mixing in the reformer 200.

End cone 54 can comprise those materials discussed above in relation to housing 10 and/or end plate 40. However, it is noted that end cone 48 can employ substantially less material than that of end plate 40 illustrated in Figure 1. As such, less thermal energy can be employed in bringing the reformer 200 up to its operating temperature compared to reformer 100. For example, end plate 40 can generally weigh about 1000 grams to about 1500 grams, whereas end cone 48 can weigh about 100 grams to about 200 grams. Additionally, employing end cone 48 allows the ignitor 38 to be a standard design (e.g., a spark plug).

Reformer 200 operates in a similar manner as that discussed above with regard to reformer 100. During operation, fuel is dispersed into inner end cone 54 by injector 36, wherein the fuel is allowed to mix with another fluid, e.g., air, from inlet 26. Unlike reformer 100, however, reformer 200 allows for mixing of fluid prior to entry into mixing zone 32. The fuel and fluid from inlet 26 can further be mixed in mixing zone 32 as discussed above with regard to reformer 100. More particularly, fluid from inlet 26 enters the mixing zone 32 via each opening 30 defined by each turbulent flow generator 28, which generate turbulent flow in the fluid that allows the fluid to intimately mix with the fuel.

Other embodiments are envisioned wherein the turbulent flow generator(s) (e.g., 28 and 50) can actuate. More particularly, the materials for the turbulent flow generator can be selected based upon the materials physical properties (e.g., coefficient of thermal expansion (CTE)) such that the turbulent flow generators have a start-up configuration and an operational configuration. For example, during start-up conditions the turbulent flow generators (e.g. louver) can substantially block openings (e.g., 30) in the ignition housing and/or openings (e.g.) in the end cone. This configuration can allow for a stable combustion in the mixing chamber during start-up. During operation, at higher flow rates compared to start-up conditions, the turbulent flow generators would open such that air and fuel can be mixed prior to entering the reforming zone 34.

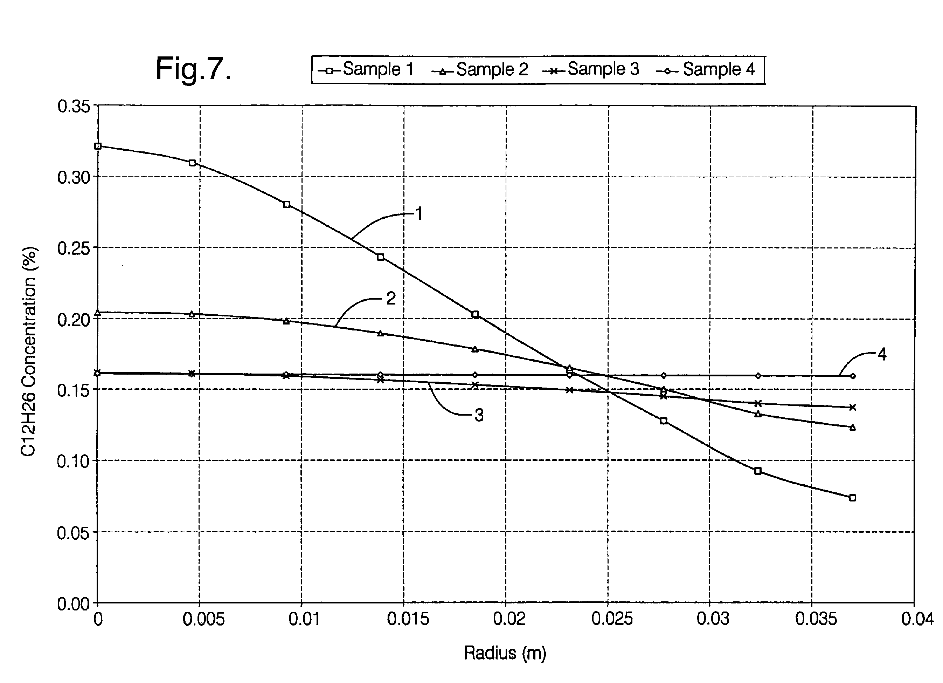

A graphical representation of the results from a computational fluid dynamic model of the reformer system (e.g., reformer 100) is illustrated in Figure 7. More particularly, the effect of air/fuel mixture upstream of the catalyst substrate face (e.g., 46) is shown as a function of the radius of the ignition housing (e.g., 18). A radius of 0 meters (m) corresponds to the center of a cylindrical ignition housing, and a radius of about 0.037 m corresponds to the inner wall of the ignition housing (e.g., inner surface 20). It is noted that for this model the fuel was injected in the cylindrical housing at a radius of 0. The concentration of C₁₂H₂₆ (an approximate model for diesel fuel) was studied for four samples (designs). Each sample was modeled at a mass gas flow rate of

5 grams per second (g/s) to simulate the flow of air into the ignition housing. Sample 1 was a simulation of a base line design comprising openings (holes) in the ignition housing, which was modeled by a velocity ratio of 0 (the term "velocity ratio" is used herein to describe the ratio of tangential velocity to radial velocity). Sample 2 was a simulation of a design comprising turbulent flow generators bordering openings in the ignition housing, which was modeled by a velocity ratio of 5. Sample 3 was a simulation of design comprising turbulent flow generators, which was modeled by a velocity ratio of 10. Sample 4 was a simulation of a design comprising turbulent flow generators (e.g., end cone design) such that a swirl was obtained, which was modeled by a swirl in the computation fluid dynamic model.

Sample 1 illustrated in the graph by line 1 showed that the fuel was more rich at the center of the ignition tube (about 0.33 percent) compared to the concentration at the wall of the ignition tube (about 0.07 percent). Moreover, line 1 illustrated a concentration gradient from the center to the wall of the ignition tube.

Sample 2 illustrated in the graph by line 2 showed an improvement in mixing over Sample 1. For example, the fuel concentration at the center of the tube was about 0.20 percent compared to about 0.14 percent at the wall of the ignition tube.

Sample 3 illustrated in the graph by line 3 showed yet a further improvement in mixing over Sample 1 and Sample 2. For example, the fuel concentration at the center was about 0.16 percent compared to about 0.15 percent at the wall of the ignition tube.

Sample 4 illustrated in the graph by line 4 illustrated a design where a swirl was obtained. It is noted that the swirl created a uniform concentration at the center and the wall of the ignition tube (about 0.16 percent).

In short, these samples illustrated that that turbulent flow generators can be used to improve the mixing of air and fuel in an ignition housing. This model illustrates that complete mixing can potentially be obtained if a swirl is created in the ignition tube. In other words, a percent mixing of greater than or equal to 80% can be obtained, with greater than or equal to 90% mixing more preferred, and with complete mixing (i.e., a homogenous mixture with 100% mixing) possible.

Advantageously, the reformers disclosed herein comprise turbulent flow generator(s). In various embodiments, the ignitor housing of the reformer, the end cone of the reformer, and/or a combination of the foregoing can comprise a turbulent flow generator. The turbulent flow generator allows for better mixing in the mixing zone of the reformer compared to designs without turbulent flow generators. In various embodiments, the length of the mixing chamber can be reduced compared to traditional reformer designs. In other words, better mixing can be achieved in a smaller volume compared to reformer designs without turbulent flow generator. Additionally, it is noted that the improved mixing of fuel with an oxidant allows for a more controlled combustion and/or reaction within the reformer. It is noted that uncontrolled combustion can be caused from fuel lean zones within the mixing zone 32 and/or reforming zone 34. Uncontrolled combustion can cause thermal aging or instability of the reformer, which can damage the catalyst, catalyst support material(s), and/or substrate(s) of the reformer. As such, controlled combustion can extend the useful life of the reformer. Furthermore, it is noted that controlled combustion can be accomplished with or without the use of a flame arrestor over the face of the substrate. Since the flame arrestor can have the undesirable effect of increasing the time for the reformer to reach its operating temperature, the reformer disclosed herein offers a number of additional improvement over those reformers that require the use of a flame arrestor. Since embodiments disclosed herein do not employ a flame arrestor, those embodiments can have a decreased time to reaching operating temperatures compared to reformers employing a flame arrestor.

While the invention has been described with reference to an exemplary embodiment, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A reformer (100, 200) comprising:
a housing (10) comprising a housing inner surface (14), a housing outer surface (12), and an inlet (26);
an ignition housing (16) comprising an ignition housing inner surface (20), an ignition housing outer surface (18), an opening (30), and a turbulent flow generator (28) bordering a portion of the opening (30), wherein the ignition housing (16) is disposed within the housing (16);
a chamber (24) defined by the housing inner surface (20) and the ignition housing outer surface (18) in fluid communication with the inlet (26) and the opening (30); and
a catalytic substrate (22) disposed within the ignition housing (16) in fluid communication with the opening (30).

2. The reformer (100, 200) of Claim 1, wherein the turbulent flow generator (28) forms a protrusion on the outer surface (12) of the ignition housing (16) or a protrusion on the inner surface (14) of the ignition housing (16).

3. The reformer (100, 200) of Claim 1, wherein the turbulent flow generator (28) comprises a geometry selected from the group consisting of a slat-like shape, a dimple-like shape, and a pyramid-like shape.

4. The reformer (100, 200) of Claim 1, further comprising an end plate (40) in physical communication with the housing (10), wherein an injector (36) and an ignitor (38) are fixed in position in the end plate (40) such that a portion of the injector (36) and a portion of the ignitor (38) are disposed within a mixing zone (32) within the ignition housing (10).

5. The reformer (100, 200) of Claim 4, wherein the mixing zone (32) is defined by a distance from an end plate inner surface (41) to a face (46) of the catalytic substrate (22) closest to the end plate inner surface (41).

6. The reformer (200) of Claim 1, further comprising an end cone (48) in operable communication with the housing (10), wherein the end cone (48) comprises an end cone turbulent flow generator (50) bordering a portion of an end cone opening (52).

7. The reformer (100, 200) of Claim 1, further comprising a flame arrestor (44) disposed over a face of the catalytic substrate (22).

8. The reformer (100, 200) of Claim 1, wherein the turbulent flow generator (28) is actuatable.

9. A method of making a reformer (100, 200), the method comprising:
disposing an ignition housing (16) within a housing (10) comprising a housing inner surface (14), a housing outer surface (12), and an inlet (26), wherein the ignition housing (16) comprises an ignition housing inner surface (20), an ignition housing outer surface (12), an opening (30), and a turbulent flow generator bordering (28) a portion of the opening (30);
creating a space between the housing inner surface (14) and the ignition housing outer surface (20) sufficient to define a chamber (24), wherein the chamber (24) is in fluid communication with the inlet (26) and the opening (30); and
disposing a catalytic substrate (22) within the ignition housing (16), wherein the catalytic substrate (22) is in fluid communication with the opening (30).

10. The method of Claim 9, wherein the turbulent flow generator (28) form a protrusion on the outer surface (18) of the ignition housing (16) or a protrusion on the inner surface (20) of the ignition housing (16).

11. The method of Claim 9, wherein the turbulent flow generator (28) comprises a geometry selected from the group consisting of a slat-like shape, a dimple-like shape, and a pyramid-like shape.

12. The method of Claim 9, further comprising disposing an end plate (40) in physical communication with the housing (10), disposing an injector (36) and an ignitor (38) in the end plate (40) such that a portion of the injector (38) and a portion of the ignitor (38) are disposed within a mixing zone (32) within the ignition housing (16).

13. The method of Claim 12, wherein the mixing zone (32) is defined by a distance from an end plate inner surface (41) to a face (46) of the catalytic substrate (22) closest to the end plate inner surface (41).

14. The method of Claim 9, further comprising disposing an end cone (48) in operable communication with the housing (10), wherein the end cone (48) comprises an end cone turbulent flow generator (50), wherein the end cone turbulent flow generator (50) borders a portion of an end cone opening (52).

15. The method of Claim 9, further comprising disposing a flame arrestor (44) over a face (46) of the catalytic substrate (22).

16. A method of using a reformer (100, 200), the method comprising:
using a turbulent flow generator (28) to create turbulent flow in a fluid stream entering a mixing zone (32) of the reformer (100, 200), wherein the turbulent flow generator (28) borders a portion of an opening (30) to the mixing zone (32) of the reformer (100, 200);
mixing the fluid stream with a fuel by using the turbulent flow of the fluid; and
reforming the fuel in a catalytic substrate (22) disposed in fluid communication with the mixing zone (32).

17. The method of Claim 16, wherein the mixing zone (32) is defined by a distance from an inner surface (41) of an end plate (40) to a face (46) of the catalytic substrate (22) closest to the end plate inner surface (41).

18. The method of Claim 16, wherein a percent mixing of the fluid stream with the fuel is greater than or equal to 80%.

19. The method of Claim 18, wherein a percent mixing is greater than or equal to 90%.
